# EUROPEAN PATENT APPLICATION

(11) **EP 1 721 917 A1**
(43) Date of publication of application: **15.11.2006**
(21) Application number: 06252428.5
(22) Date of filing: 08.05.2006
(51) Int. Cl.: C08F 265/06, C08F 220/58, C08L 33/26, A61L 15/58, C08L 41/00, C08K 5/053, C08L 33/06

(54) **Polymeric hydrogel compositions**

(30) Priority: 13.05.2005 US 128940
(71) Applicant: Tyco Healthcare Group LP, Mansfield, MA 02048 (US)
(72) Inventor: Coggins, Scott, palmer, MA 01069 (US); Sankalia, Nilay, Agawam, MA 01001 (US); Copp, Warren, Chicopee, MA 01013 (US)
(74) Representative: Jones, David Colin

(57) **Abstract**

The present disclosure provides a polymeric composition. The polymeric composition may be used as a hydrogel alone or for production of various biomedical devices including, for example, transmission electrodes and monitoring electrodes.

## Description

### BACKGROUND

### 1. Technical Field

The present disclosure relates to polymeric compositions and uses with biomedical electrodes.

### 2. Description of the Related Art

Bioadhesive hydrogels are widely used as a means of attaching biomedical devices and personal care products to the skin. Hydrogels find particular utility for adhering electrodes to the skin because their properties of non-permanent adhesion, relatively high water content, and their capacity to be doped with an ionically conductive substances to improve electrical conductance. Specifically, hydrogels may be used with transmission electrodes (e.g., transcutaneous electric nerve stimulation (TENS) devices); defibrillator electrodes, and monitoring electrodes [e.g., electrocardiogram (ECG) electrodes, electroencephalography (EEG) electrodes, and electromyography (EMG) electrodes].

Several properties are required of a hydrogel in order for it to be effective as a bioadhesive. Generally, bioadhesives, particularly those used with biomedical electrodes, must be capable of firmly adhering to the skin throughout the clinical procedure and frequently must adhere to hairy, oily, or damp skin and are expected to remain adhered for extended periods of time. In the case of in-patient procedures, particularly for intensive care and neonatal care, electrodes are frequently applied, remove, and reapplied. The peel strength (i.e., force required to detach the hydrogel from the skin) must be comfortably less than that of human skin (i.e., the force required to disrupt the skin's integrity) such that the adherent article may be removed without significant pain or skin damage. The hydrogel composition must be sufficiently viscous such that it substantially resists flow under normal usage conditions such as either room or body temperature depending upon the application, high humidity or excess moisture, and during the application of an electrical current.

Bioadhesive hydrogels often are not reusable because many lose significant tackiness after the first application. Alternatively, bioadhesive hydrogels which retain their adhesive property for prolong periods of time or following multiple applications frequently have a peel strength that is too high, causing serious discomfort and/or tissue damage upon removal.

It is an object of this invention to provide polymeric compositions that remain adhered to the skin for extended periods of time and may be removed and reapplied without a significant loss of performance.

### SUMMARY

In one aspect, the invention provides a polymeric composition comprising: (i) about 5-30 wt % of a crosslinked polymer comprising at least one olefinically unsaturated water soluble monomer; (ii) about 5-20 wt % of a linear, branched, or star-type non-crosslinked polymer having an average molecular weight less than about 50,000; (iii) about 40-60 wt % of a polyhydric alcohol; and (iv) less than about 5-20 wt % of water. In preferred embodiments of this aspect, the non-crosslinked polymer has an average molecular weight less than about 20,000, less than about 10,000, or less than about 7,500.

In a second aspect, the invention also provides a polymeric composition comprising: (i) about 5-30 wt % of a crosslinked polymer comprising at least one olefinically unsaturated water soluble monomer, wherein the non-crosslinked polymer is not a carboxylic acid-based polymer; (ii) about 5-20 wt % of a linear, branched, or star-type non-crosslinked polymer having an average molecular weight less than about 25,000,000; (iii) about 40-60 wt % of a polyhydric alcohol; and (iv) less than about 5-20 wt % of water. In preferred embodiments of this aspect, the non-crosslinked polymer has an average molecular weight less than about 10,000,000, less than about 6,000,000, or less than about 1,000,000.

In preferred embodiments of the foregoing aspects, the crosslinked polymer and the non-crosslinked polymer form an interpolymer. Preferably, the non-crosslinked polymer is entangled within the crosslinked polymer.

The crosslinked polymer may be a homopolymer or a copolymer. Particularly useful olefinically unsaturated water soluble monomers include, for example, 2-acrylamido-2-methylpropanesulfonic acid (AMPS), acrylic acid, 3-sulphopropyl acrylate (SPA), and salts thereof. Particularly useful salts include, for example, the sodium, potassium, magnesium, calcium, lithium, and ammonium salts of the water soluble monomers. A particularly useful copolymer is an AMPS/acrylic acid copolymer. Preferably, the ratio of AMPS:acrylic acid is between about 0.4:1 and 2.1:1. Preferably, the ratio of AMPS:acrylic acid is between about 1:1 and 1.75:1, or even 1.50:1 and 1.65:1.

Although any linear, branched, or star-type non-crosslinked polymer may be used in this invention, particularly useful non-crosslinked polymers are acrylate or methacrylate homopolymers and copolymers. Other useful non-crosslinked polymers include, for example, polyacrylates (e.g., GOOD-RITE® K-732 sold by Noveon, Inc., Cleveland, OH), rosin esters (Aquatac® 9027 sold by Arizona Chemical, Inc. Jacksonville, FL), polyvinyl alcohols (PVA polymers; e.g, various Flexcryl® polymers sold by Air Products and Chemicals, Inc., Allentown, PA), polyvinyl pyrrolidone (PVP), polyoxyethylene (PEO), nonionic or ionic polyacrylamide, karaya gum, gum Ghatti, Gum Arabic, Gum agar, Tragacanth gum, guar gum, modified guar gum products (e.g., hydroxyl propyl guar) locust bean gum, cellulosics, modified cellulosics (hydroxyl ethyl cellulose, etc.), maltodextrin, polysaccharides, tall oil, rosin esters, and binary tertiary and quaternary blends thereof. Also, non-crosslinked polymers for use in this invention may also include nylon polymers such as ε-caprolactam. Particularly useful non-carboxylic acid-based polymers include polyacrylamides.

Useful polyhydric alcohols include, for example, glycerol, propylene glycol, polypropylene glycol, neopental glycols, triethanolamine, diethanolamine, ethanolamione, butylene glycol, polyethylene glycol, n-methyl diethanolamine, and isopropanolamine. In desirable embodiments, the molar ratio of the polyhydric alcohol to water is between about 1:1 and about 3.5:1.

In desirable embodiments, the polymeric composition has a Brookfield viscosity of less than about 40,000 cps, less than 20,000 cps, or less than about 1500 cps. Preferably, the Brookfield viscosity is about 500-1000 cps.

The polymeric compositions of this invention may be used as a bioadhesive for a variety of personal care products, medical devices, and wound dressings. The hydrogels of this invention are particularly useful as bioadhesives for electrodes including transmission electrodes and monitoring electrodes.

### DETAILED DESCRIPTION OF THE EXEMPLARY EMBODIMENTS

The invention provides a polymeric composition that is about 5-30 wt % of a crosslinked polymer of at least one olefinically unsaturated water soluble monomer; about 5-20 wt % of a linear, branched, or star-type non-crosslinked polymer having an average molecular weight less than 20,000; about 40-60 wt % of a polyhydric alcohol; and less than about 5-20 wt % of water. The invention also provides a polymeric composition that is about 5-30 wt % of a crosslinked polymer comprising at least one olefinically unsaturated water soluble monomer, wherein the non-crosslinked polymer is not a carboxylic acid-based polymer; about 5-20 wt % of a linear, branched, or star-type non-crosslinked polymer having an average molecular weight less than about 25,000,000; about 40-60 wt % of a polyhydric alcohol; and less than about 5-20 wt % of water. Preferably, the crosslinked polymer and the non-crosslinked polymer form an interpolymer. The polymeric compositions of this invention contain at least two polymers―a crosslinked polymer of least one olefinically unsaturated water soluble monomer and a non-crosslinked polymer, a crosslinking agent, one or more polymerization initiators, one or more humectants, and a neutralizing agent (base).

The crosslinked polymer comprises a homopolymer or copolymer of olefinically unsaturated water soluble monomers. Suitable monomers include, for example, olefinically unsaturated carboxylic acids, carboxylic acid anhydrides, and sulfonic acids such as acrylic acid, methacrylic acid, maleic acid, cinnamic acid, itaconic acid, crotonic acid, ethacrylic acid, citoconic acid, mesaconic acid, fumaric acid, β-sterylacrylic acid, acrylate esters, acrylamides, olefins, vinyl esters, vinyl ethers, vinyl amides, 2-acrylamido-2-methylpropanesulfonic acid (AMPS), and 3-sulphopropyl acrylate (SPA), dimethyl acrylamide, diacetone acrylamide, hydroxyl ethyl methacrylate, hydroxyl ethyl acrylate, dimethylaminoethyl acrylate, dimethylaminoethyl methacrylate, ethoxy ethoxy ethyl methacrylate, ethoxy, ethoxy ethyl methacrylate, methyl acrylate, ethyl acrylate, propyl acrylate, butyl acrylate, methyl methacrylate, methacrylic acid, Particularly useful copolymers include acrylic acid/AMPS, acrylic acid/SPA, AMPS/SPA diacetone acrylamide/acrylic acid, and acrylic acid/acrylamide copolymers; however, copolymers of any suitable monomers may be used.

The above homopolymers and copolymers may be crosslinked with any polyene (e.g., decadiene and trivinyl cyclohexame), acrylamides (n-n'-methylene bis acrylamide (nnMBA), polyfunctional acrylates (e.g., trimethylol propane triacrylate), or polyfunctional vinylidene monomers containing at least two terminal CH₂ groups (e.g., butadiene, isoprene, divinyl benzene, divinyl naphthalene, and the allyl acrylates). The crosslinker nnMBA is particularly useful. Other crosslinking monomers useful with copolymers include, for example, polyalkenyl polyethers having a plurality of alkenyl ether groups per molecule. Useful crosslinkers of this type include, for example, diallyl esters, dimethallyl ethers, allyl or methallyl acrylates, polyethylglycol methacrylates (i.e., PEG 400, PEG 800, etc.) and acrylamides, tetraallyl tin, tetravinyl silane, polyalkenyl methanes, diacrylates, and dimethacrylates, and divinyl compounds such as divinyl benzene, polyallyl phosphate, and diallyloxy compounds, and quaternary ammonium compounds. In addition to difunctional crosslinkers, tri and tetrafunctional monomers (e.g., trimethylol propane triacrylate) can also be used. Typically, the amount of crosslinker used is low; less that about 1 wt %, preferably less than about 0.7 wt %, more preferably less than 0.4 wt %.

Polymerizing and crosslinking the unsaturated water soluble monomers, to form a crosslinked polymer, in the presence of the non-crosslinked polymer produces a bioadhesive hydrogel with reusable and extended wear properties. The non-crosslinked polymer forms a semi-interpenetrating polymer network (semi-IPN; interpolymer) by becoming physically entangled in the crosslinked polymer network during the polymerization/crosslinking process. Suitable non-crosslinked polymers include linear, branched, and star-type polymers. Branched and star-type polymers provide greater steric interaction with the crosslinked polymer and, therefore, impart greater viscosity. Typically, branched and star-type polymers are used in hydrogels having lower amounts of crosslinked polymers or when a higher viscosity is desired. Suitable polymers typically have an average molecular weight of less than 20,000, preferably less than 15,000, more preferably less than 10,000, or even about 5,000. Such polymers include, for example, homopolymers and copolymers of acrylic acid, SPA, and AMPS, such as polyacrylates (e.g., GOOD-RITE® K732 from Noveon, Inc.), polyAMPS, poly(acrylic acid-(3-sulphopropyl)ester), and Flexcryl® PVA polymers (from Air Products and Chemicals, Inc.). Other useful polymers include rosin esters, fumed silica, ionic (e.g., cationic) and non-ionic polyacrylamide, (Magnifloc® and/or Cyanamer® brands Cytec Industries, Five Garrett Mountain Road, West Patterson, New Jersey, USA; e.g., Cyanamer® N-300 LMW, Cyanamer® N-100). These polymers have average molecular weights ranging from 250,000 - 25,000,000 and can be nonionic, anionic, or cationic.

The choice of polyhydric alcohol and its proportion relative to water in the final polymeric composition may be selected based on the desired properties of the final composition. High ratios of polyhydric alcohol to water (i.e., about 3.5:1). For example, relatively low water content is advantageous because it results in a polymeric composition having a higher electrical impedance, which particularly useful as an electrode bioadhesive. Further, low water content compositions have superior "restick" properties and are resistant to drying out. These compositions also tend to be hypoallergenic.

The viscosity of the resulting polymeric composition may be measured and expressed as, for example, the Brookfield viscosity. The Brookfield viscosity may be measured using any methodology known in the art. For example, solution viscosity is determined by rotating a calibrated spindle machined with an integral plate through the fluid at a specified velocity. The delay or drag that the plate experiences as it is rotated through the fluid is corrlelated to the fluid viscosity. The dial on the top of the viscometer displays a 0-100 scale. The scale result is multiplied by a factor that compensates for velocity and plate geometry to yield a viscosity on units of centipoise. In this specific case, a #4 spindle was used at a velocity of 20 rpm on a Brookfield RVF Viscometer.

The polymeric compositions of this invention may be used as hydrogels with various personal care products, medical devices, and wound dressings. When used with disposable waste-management devices (i.e., urine, menstrual and fecal waste), typically the polymeric composition is applied to an aperture or a flange for adhesive attachment. The polymeric compositions of this invention may be used with any disposable urine, menstrual, or fecal waste-management device known in the art.

The polymeric compositions of the invention find particular utility as bioadhesives for use with various medical devices and wound dressings that require prolonged skin adhesion or are required to retain their adhesive properties under conditions of frequent removal and re-application. Such medical devices include, for example, biomedical electrodes (e.g., ECG, EMG, EEG, TENS, and defibrillation electrodes), bandages, tapes, and catheters.

Biomedical electrodes are well known in the art and are typically designed based primarily on their intended use. For example, monitoring electrodes (e.g., ECG and EEG electrodes) tend to be smaller than transmission electrodes (TENS and defibrillation electrodes). The principle feature of any transmission biomedical electrode is its capacity to efficiently transmit electrical signals between the patient's skin and the electrical cables attached to a medical device (i.e., stimulator). Monitoring electrodes must have the capability to sense ionic or electrical potentials across the skin and transmit an electrical signal to the medical device (i.e., monitor). A typical electrode comprises an electrically conductive member, that is in electrical contact with the electrical cables of the medical device, often by means of a snap fastener, a conductively-coated (i.e., carbon black-coated, metallically-coated) or metallic tab that extends beyond the contact surface (i.e., a tab electrode). The electrically conductive member is also in electrical contact with the patient's skin. This electrical contact is typically made by interposing a conductive gel material between the electrically conductive member and the patient's skin. This gel may be topically applied, may reside within an absorbent core integral to the biomedical electrode assembly, or may be coated on the skin-facing surface of the biomedical electrode assembly. Polymeric hydrogels are frequently used to make the electrical contact between the conductive member of the biomedical electrode and the patient's skin because the electrical properties of hydrogels are well known and easily manipulated for various purposes. Additionally, many polymeric hydrogels have desirable bioadhesive properties to aid in positioning and affixing the biomedical electrode to the patient.

### Example 1

An polymeric composition was formed from the following pre-gel solution:

| | | | |
|---|---|---|---|
| NaAMPS | 1.77720 pph | nn-MBA | 0.34828 pph |
| AMPS acid | 12.10408 pph | Irgacure® 184 | 0.05672 pph |
| Acrylic Acid | 8.75665 pph | Darocur® 1173 | 0.22688 pph |
| Glycerol | 51.38166 pph | NaCl | 0.49754 pph |
| Good-Rite® K-732 | 11.94089 pph | 50% NaOH | 4.7684 pph |
| | | ddH₂O | 3.3733 pph |

The pre-gel solution is formed as follows: The sodium acrylamido methylpropanesulfonic acid sodium ester solution (NaAMPS) is measured and added to a clean, dry vessel. Next, the following reagents are added in order, with stirring: n,n' methylene bis acrylamide (nn-MBA) in deionized water (1% w/v), acrylic acid, additional deionized water (ddH₂O), glycerol (1,2,3 propane triol), Goodrite® K-732 (uncrosslinked polyacrylic acid from Noveon, Inc.), Irgacure® 184 (1-hydroxy cyclohexyl phenyl ketone), AMPS acid, and sodium chloride. This solution is mixed until all reagents are dissolved. The sodium hydroxide, as a 50% w/v solution, is added slowly to control the batch temperature. Next, the Darocur® 1173 (2-hydroxy 2-methyl 1-phenyl 1- propanone) is added and the resulting solution is mixed until uniform.

As soon as the above solution is uniform, it is coated onto a substrate (typically siliconized plastic film, but any appropriate material will do). The pre-gel solution is cast, and polymerized via free radical polymerization resulting from the homolytic decomposition of the photoinitiators facilitating free radical initiation followed by propagation and chain scission. The extent of cure, and therefore the physical properties of the final interpolymeric hydrogel, can be modulated by varying the duration of dose and/or intensity of ultraviolet light. The preferred hydrogel results from curing using a dose of 1.2 J/ cm² (UVA).

The resulting polymeric composition contains about 100 ppm residual acrylic acid monomer and about 80 ppm residual AMPS monomers, as determined by HPLC, and has a final pH of about 5.1. This polymeric composition has an ideal balance of cohesive and adhesive properties, adheres well to skin, and is capable of clearly transmitting electrical signals and impulses.

As these compositions were developed, they were polymerized into sheet form and converted into patches that could be tested. Specific test attributes used during the optimization include adhesion to the skin of volunteers (human), residual monomer scores via HPLC, final pH, successive restick adhesion testing to volunteers, water content by moisture balance, and conductivity per AAMI/ANSI EC12: (2000) guidelines.

### Example 2

In another series of tests, several compositions were prepared using alternate crosslinked copolymers as the basis for improved compositions. Specifically, one copolymer blend of diacetone acrylamide, acrylic acid, and potassium acrylate were compounded using an alternate base (potassium hydroxide), an alternate crosslinking agent (triethylene glycol dimethacrylate; "TEGDMA"), and a linear polymer that was not covalently linked to the polymer backbone was added to facilitate improved adhesion to skin. The polymeric composition was prepared essentially as described in Example 1. The pre-gel solution components are as follows:

| | | | |
|---|---|---|---|
| Diacetone acrylamide | 6.33 pph | Darocur® 1173 | 0.49 pph |
| Acrylic acid | 17.63 pph | N-methyl diethanolamine | 3.62 pph |
| Glycerol | 37.52 pph | Triethanolamine | 3.62 pph |
| Good-Rite® K-732 | 10.71 pph | 4-methoxy phenol | 0.05 pph |
| PVP K-90* | 0.90 pph | NaCl | 1.36 pph |
| TEGDMA | 0.15 pph | 45% KOH | 14.92 pph |
| | | ddH₂O | 2.71 pph |

| | | | |
|---|---|---|---|
| * avg. MW = 90,000 | | | |

As these compositions were developed, they were polymerized into sheet form and converted into patches that could be tested. Specific test attributes used during the optimization include adhesion to the skin of volunteers (human), residual monomer scores via HPLC, final pH, successive restick adhesion testing to volunteers, water content by moisture balance, and conductivity per AAMI/ANSI EC12: (2000) guidelines.

### Example 3

A series of polymeric compositions was developed in order to further investigate structure/property relationships. Monomer concentrations, monomer ratios, and water content were varied as follows (all concentrations are given in pph):

| | A | B | C | D | E | F | G | H | I |
|---|---|---|---|---|---|---|---|---|---|
| ddH₂O | 18.816 | 19.136 | 18.996 | 16.890 | 15.446 | 14.790 | 14.067 | 14.901 | 20.376 |
| Na AMPS | 14.999 | 8.329 | 8.329 | 10.730 | 8.329 | 5.800 | 4.640 | 5.800 | 14.999 |
| Glycerol | 47.029 | 47.857 | 47.493 | 50.678 | 54.042 | 51.764 | 49.205 | 52.150 | 50.950 |
| AMPS acid | 0.000 | 0.000 | 0.000 | 0.000 | 0.000 | 9.199 | 3.690 | 9.200 | 0.000 |
| nn-MBA | 0.020 | 0.020 | 0.020 | 0.020 | 0.020 | 0.020 | 0.020 | 0.020 | 0.020 |
| NaOH | 2.775 | 4.625 | 4.625 | 3.700 | 4.625 | 4.550 | 5.337 | 4.551 | 2.775 |
| Acrylic Acid | 10.000 | 16.666 | 16.666 | 14.360 | 16.666 | 10.000 | 16.666 | 10.000 | 10.000 |
| Irgacure 184 | 0.075 | 0.075 | 0.075 | 0.075 | 0.075 | 0.075 | 0.075 | 0.075 | 0.075 |
| Darocur 1173 | 0.300 | 0.300 | 0.300 | 0.300 | 0.300 | 0.300 | 0.300 | 0.300 | 0.300 |
| Fumed Silica | 2.490 | 2.490 | 0.000 | 1.250 | 0.000 | 0.000 | 2.500 | 2.500 | 0.000 |
| Polyacrylate | 3.000 | 0.000 | 3.000 | 1.500 | 0.000 | 3.000 | 3.000 | 0.000 | 0.000 |
| NaCl | 0.500 | 0.500 | 0.500 | 0.500 | 0.500 | 0.500 | 0.500 | 0.500 | 0.500 |
| Skin Adhesion | 335 | 252 | 357 | 394 | 293 | 419 | 375 | 396 | 239 |
| Adhesive Residue | 13 | 6 | 1 | 12 | 6 | 6 | 4 | 5 | 257 |
| AC Impedance | 405 | 336 | 400 | 505 | 650 | 742 | 812 | 677 | 302 |

The method for producing the polymeric compositions describe above was the same as in Example 1.

As these compositions were developed, they were polymerized into sheet form and converted into patches that could be tested. Specific test attributes used during the optimization include adhesion to the skin of volunteers (human), residual monomer scores via HPLC, final pH, successive restick adhesion testing to volunteers, water content by moisture balance, and conductivity per AAMI/ANSI EC 12: (2000) guidelines.

As a part of the assessment of this composition, the preferred sample has been tested for biocompatibility and hypoallergenicity per ISO 10993 guidelines and the preferred composition was determined to be non-cytotoxic (USP AGAR Diffusion), non- irritating (Primary Skin Irritation), non-sensitizing (Buehler Patch Test), and hypoallergenic (Repeated skin Insult Patch Test). All of these tests were completed under GLP conditions.

A more desirable polymer in this case would be one that allows for the device to be applied, then removed and reapplied without a significant loss of its adhesiveness. The preferred composition would leave little if any residue behind once it is removed from the substrate (skin).

Although the foregoing present disclosure has been described in some detail by way of illustration and example for purposes of clarity of understanding, it will be readily apparent to those of ordinary skill in the art in light of the teachings of this present disclosure that certain changes and modifications may be made thereto without departing from the spirit or scope of the appended claims.

## Claims

1. A polymeric composition comprising:
(i) about 5-30 wt % of a crosslinked polymer comprising at least one olefinically unsaturated water soluble monomer;
(ii) about 5-20 wt % of a linear, branched, or star-type non-crosslinked polymer having an average molecular weight less than about 50,000;
(iii) about 40-60 wt % of a polyhydric alcohol; and
(iv) less than about 5-20 wt % of water.

2. The polymeric composition of claim 1, wherein said crosslinked polymer and said non-crosslinked polymer forms an interpolymer.

3. The polymeric composition of claim 1, wherein at least one of said water soluble monomers is selected from the group consisting of 2-acrylamido-2-methylpropanesulfonic acid (AMPS), acrylic acid, 3-sulphopropyl acrylate (SPA), and salts thereof.

4. The polymeric composition of claim 1, wherein said crosslinked polymer is an AMPS/acrylic acid copolymer.

5. The polymeric composition of claim 4, wherein the molar ratio of AMPS to acrylic acid in said crosslinked polymer is between about 0.4:1 and about 2.1:1.

6. The polymeric composition of claim 5, wherein said ratio of AMPS to acrylic acid in said crosslinked polymer is between about 1.50:1 and 1.65:1.

7. The polymeric composition of claim 1, wherein the molar ratio of polyhydric alcohol to water in said polymeric composition is between about 1:1 and about 3.5:1.

8. The polymeric composition of claim 1, wherein said non-crosslinked polymer is an acrylate homopolymer or copolymer.

9. The polymeric composition of claim 8, wherein said non-crosslinked polymer is a polyacrylate having an average molecular weight less than 10,000.

10. The polymeric composition of claim 1, wherein said polyhydric alcohol is glycerol.

11. The polymeric composition of claim 1, wherein said polymeric composition has a Brookfield viscosity of less than about 40,000 cps.

12. The polymeric composition of claim 11, wherein said polymeric composition has a Brookfield viscosity of less than about 1500 cps.

13. The polymeric composition of claim 12, wherein said polymeric composition has a Brookfield viscosity of about 500-1000 cps.

14. A polymeric composition comprising:
(i) about 5-30 wt % of a crosslinked polymer comprising at least one olefinically unsaturated water soluble monomer;
(ii) about 5-20 wt % of a linear, branched, or star-type non-crosslinked polymer having an average molecular weight less than about 25,000,000, wherein said non-crosslinked polymer is not a carboxylic acid-based polymer;
(iii) about 40-60 wt % of a polyhydric alcohol; and
(iv) less than about 5-20 wt % of water.

15. The polymeric composition of claim 14, wherein said crosslinked polymer and said non-crosslinked polymer forms an interpolymer.

16. The polymeric composition of claim 14, wherein at least one of said water soluble monomers is selected from the group consisting of 2-acrylamido-2-methylpropanesulfonic acid (AMPS), acrylic acid, 3-sulphopropyl acrylate (SPA), and salts thereof.

17. The polymeric composition of claim 14, wherein said crosslinked polymer is an AMPS/acrylic acid copolymer.

18. The polymeric composition of claim 17, wherein the molar ratio of AMPS to acrylic acid in said crosslinked polymer is between about 0.4:1 and about 2.1:1.

19. The polymeric composition of claim 14, wherein said non-crosslinked polymer is a polyacrylamide.

20. The polymeric composition of claim 14, wherein said non-crosslinked polymer has an average molecular weight less than 6,000,000.

21. The polymeric composition of claim 1, wherein said polyhydric alcohol is glycerol.

22. A polymeric composition comprising:
(i) about 5-30 wt % of a crosslinked copolymer comprising 2-acrylamido-2-methylpropanesulfonic acid (AMPS) or salt thereof, and acrylic acid or salt thereof, wherein the ratio of said AMPS to said acrylic acid is between about 0.5:1 and about 2.1:1;
(ii) about 5-15 wt % of a non-crosslinked polyacrylate having an average molecular weight less than 20,000; and
(iii) about 40-60 wt % of glycerol;
(iv) about 5-20 wt % of water; and
wherein said crosslinked copolymer and said polyacrylate forms an interpolymer, and wherein said polymeric composition having a Brookfield viscosity of less than about 1500 cps.

23. A biomedical electrode used with the polymeric composition of claim 1.

24. A biomedical electrode used with the polymeric composition of claim 22.
